(19) Europäisches Patentamt

European Patent Office

Office européen des brevets

(11) Publication number: **0 220 494 B1**

# EUROPEAN PATENT SPECIFICATION

(45) Date of publication of patent specification: **27.11.91**  (51) Int. Cl.⁵: **H02M 3/337, H01F 29/00**

(21) Application number: **86113080.5**

(22) Date of filing: **23.09.86**

(54) DC to DC energy conversion system.

(30) Priority: **31.10.85 US 793520**

(43) Date of publication of application:
**06.05.87 Bulletin 87/19**

(45) Publication of the grant of the patent:
**27.11.91 Bulletin 91/48**

(84) Designated Contracting States:
**DE FR GB IT**

(56) References cited:
**US-A- 3 238 480**
**US-A- 3 483 499**

(73) Proprietor: **International Business Machines
Corporation
Old Orchard Road
Armonk, N.Y. 10504(US)**

(72) Inventor: **Gillett, John Brian
7 Meher Circle
Woodstock New York 12498(US)**
Inventor: **Spreen, James Harold
Cedar Ridge Road
Stone Ridge New York 12484(US)**

(74) Representative: **Burt, Roger James, Dr.
IBM United Kingdom Limited Intellectual
Property Department Hursley Park
Winchester Hampshire SO21 2JN(GB)**

Rank Xerox (UK) Business Services

## Description

The present invention relates to DC to DC energy conversion systems.

In DC to DC conversion systems, DC power is applied through a single ended (asymmetrical) or symmetrical drive circuit, where it is converted into pulse signals which are in turn applied to the primary winding of a power transformer. The transformer converts the pulse signals to the desired level and then applies them through a rectifier to a filtering circuit generally comprising an LC inductance/capacitance filter. Problems in this conventional system include tight coupling requirements in the output transformers, ripple in the transformer output signals and substantial large filtering circuitry to eliminate or substantially reduce the ripple. High currents in large power transformers contribute to significant power losses within the transformer structure.

US Patent 3,483,499 describes an inductive magnetic device structure for operation at high temperatures. The device comprises, a magnetic core having a portion extending through an aperture formed in each of a set of flat insulative plates which are stacked to form a unit. A film conductor is deposited onto each plate to form one or more turns around the aperture. Each plate carries terminals to which the respective conductors are connected. The terminals of several plates can be interconnected to provide a series winding in the case of an inductor or provide two or more separate windings in the case of a transformer. The structure permits such devices to operate at temperatures approaching the Curie Point of the magnetic core.

In an attempt to overcome these difficulties, the present invention provides a DC to DC energy conversion system for providing an output voltage, having a ripple component less than a predetermined value, to a load, the system comprising a magnetic component having substantially flat primary and secondary windings, and a core of magnetic material characterised by, the secondary being centre-tapped and connected across an external inductance with the centre-tapping to one side and the two ends uni-directionally to the other, the windings being wound on the core to achieve tight coupling between the windings, the arrangement being such as to perform the dual functions of voltage transformation and filter inductance, energy being delivered to the load from the magnetic component during the time that the stored energy in the transformer is increasing.

Such a DC to DC converter employs a modified transformer-inductor construction which provides the normal power transformer function and some or all of the inductor filter function to thereby reduce the ripple of the rectified current. As particularly described hereinafter, a planar winding configuration using a centre tapped single turn secondary winding provides a tightly coupled transformer and inductor combination. It is preferred to use a single ended asymmetric drive associated with the primary winding of the transformer, but a power supply with a symmetric drive can also be used.

The present invention will be described further by way of example with reference to an embodiment of the invention as illustrated in the accompanying drawings, in which'-

Fig. 1 is a block schematic/diagram of one form of DC to DC energy conversion system according to the present invention;

Fig. 2 is a schematic diagram of one form of conventional asymmetric dual switch system that can be used to provide the input to the transformer primary winding;

Fig. 3 is a schematic diagram of one form of conventional symmetric full bridge rectifier that can be used to provide the input to the transformer primary winding; and

Fig. 4 is an exploded perspective view of the planar transformer/inductor configuration of the system of Figure 1.

In the drawings, like elements are designated by corresponding reference numbers, and identical elements in different specific embodiments are designated by identical reference numbers with a prime or super-prime descriptor added.

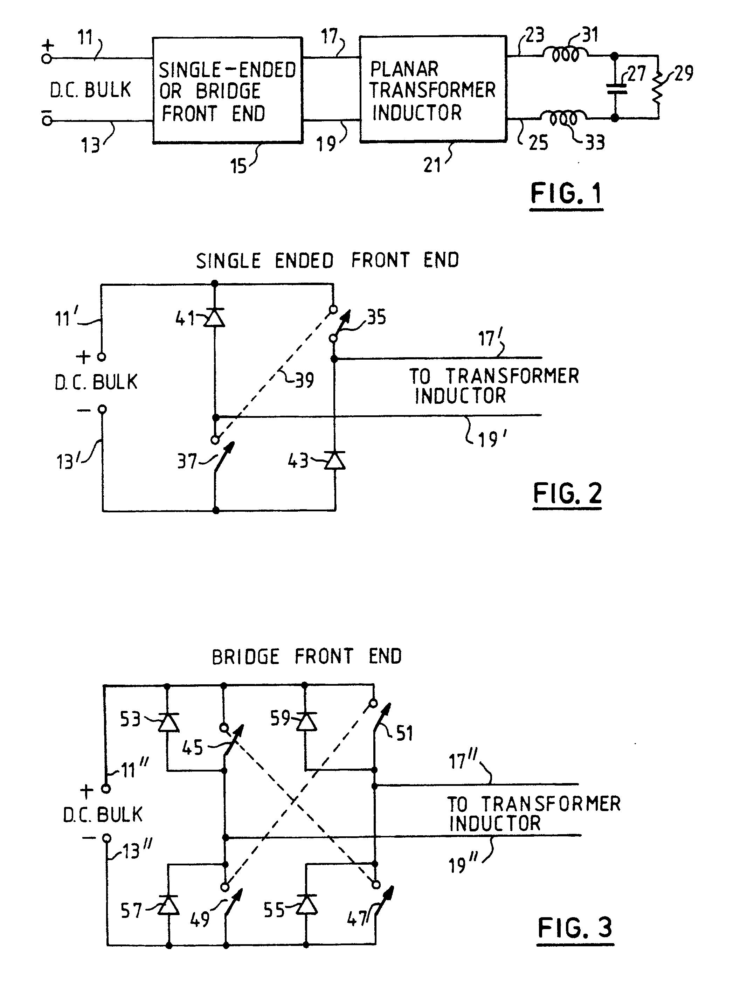

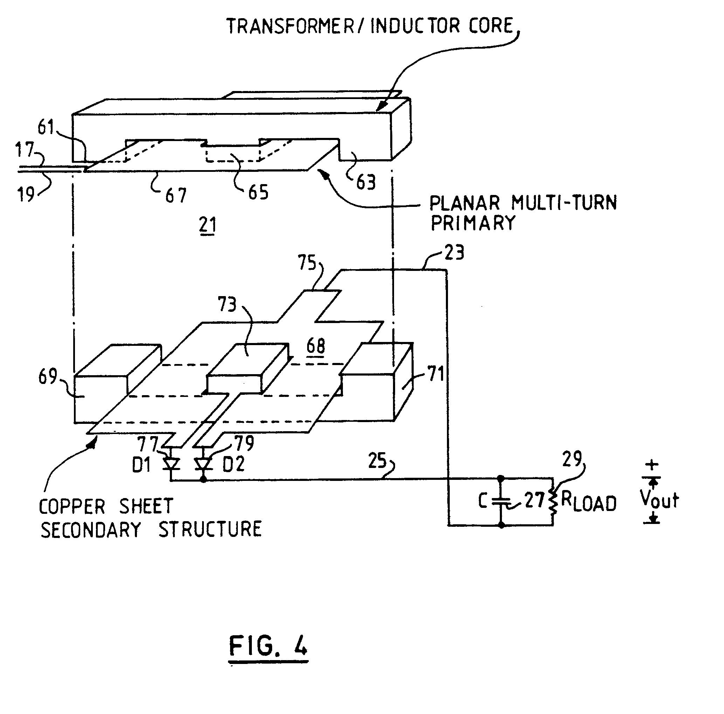

Referring now to the drawings and more particularly to Fig. 1 thereof, a block diagram of one form of DC to DC converter is illustrated. A DC bulk voltage, which may be by way of example 200 volts, is applied through conductors 11 and 13 to a single ended dual switch or symmetric bridge front end circuit 15 shown and described in greater detail hereinafter. The DC voltage is converted to a pulse wave train having a frequency in the preferred range of 100 to 200 kilohertz, which is then applied through output conductors 17 and 19 to a planar transformer inductor device 21 more fully described hereinafter. The resultant output signals from the transformer on an order of magnitude of approximately 5-10 volts but a current in the range of 200 amperes, are applied through rectifiers 77 and 79 (Fig. 4) to output terminals 23 and 25 to a load filtering capacitor 27 and a load illustrated as resistor 29. While the planar transformer inductor 21 includes inductance used to filter the signal on the transformer secondary, additional inductance, if required, and indicated by inductors 31 and/or 33 may be utilised.

The arrangement is designed to operate within a switch mode power supply (SMPS) mode in which the initial conversion from DC voltage to a pulsating voltage is provided either within a single ended dual switch asymmetric half bridge, as illustrated in Fig. 2, or a symmetric full bridge rectifier, as illustrated in Fig. 3. It will be understood by those skilled in the art that other asymmetric or symmetric drive systems may be employed. In Figs. 2 and 3, the input and output terminals corresponding to Fig. 1 are indicated in script or superscript identifiers to correspond to the showing in Fig. 1.

Referring now to Fig.2, the DC bulk voltage is applied via conductors $11'$ and $13'$ across switches 35 and 37 which are coupled to operate simultaneously as indicated by dotted line 39. Switches 35 and 37 are illustrated as mechanical switches for ease of description, although it will be appreciated that in practice they are conventional electronic switches, one specific embodiment being FET (field effect transistor) switching circuits. When switches 35 and 37 are closed, positive pulses corresponding in amplitude to the DC bulk voltage and in duration to the time the switches are closed will be applied to output conductors $17'$ and $19'$ respectively. When pairs of switches are operated simultaneously, a fast transient secondary current signal is generated by transformer 21, but the amplitude of any primary voltage spike is controlled by clamping diodes 41 and 43, which clamp the primary signal to the voltage level corresponding to the DC bulk voltage. The resulting pulse signals are then applied via conductors $17'$ and $19'$ to planar transformer inductor 21. The above described bridge circuit is considered conventional and known in the art.

Referring briefly to Fig. 3, a conventional symmetric full bridge rectifier comprising switches 45, 47 and 49, 51 which are coupled as indicated by the dotted lines have associated clamping diodes 53, 55 and 57, 59 respectively. During each sequence of the electronic switches which would be controlled from an external source such as a clock or timing pulse generator, an output signal of twice the frequency as the signal in the dual switch front end is provided. While functionally the single ended or symmetrical bridge front end may be deemed as equivalents to provide the input to the transformer, the embodiment will be described in terms of the dual switch primary circuit illustrated in Fig. 2, and in terms of high power circuits having low voltage requirements of 5 to 10 volts but high currents of 100 to 200 amperes from transformers designed to carry this level of power, although the basic approach could be used in a low power operation. With high current transformers, it is desirable to reduce the number of transformer turns to a minimum, since the copper loss for even a limited number of turns can be significant. However, in a step-down transformer, the number of turns on the windings is also a function of the turns-ratio of the transformer required to reduce the input voltage to correspond to the desired output level. Another requirement of power transformers is that they be tightly coupled, i.e., that the primary and secondary windings be physically positioned as close as possible to reduce the leakage inductance. Other problems associated with conventional transformer action include the LC filters utilised at the output of the transformers to filter the ripple voltage which may vary the output voltage beyond specified control limits for the power signal.

Conventional power transformers used in DC to DC converters comprise much of the physical bulk in the converters. To reduce the current ripple generally requires large inductors and capacitors, and the variation between the size of the capacitor and the inductor in the filter represents a trade-off in that, generally speaking, one filtering element tends to vary inversely in size with the other. These problems are solved by the centre-tapped planar transformer configuration, which provides most or all of the inductance required in the output filter while still providing a tightly coupled transformer and inductor combination.

Referring now to Fig. 4, the planar transformer/inductor 21 is illustrated in an open exploded position for purposes of clarity. Input conductors 17 and 19 are applied to the primary winding of the transformer, which, as illustrated, comprises outer legs 61 and 63 and an inner leg 65 interconnected in a conventional E core configuration. The secondary winding 68 comprises a single winding in the form of a conductive sheet of copper, for example, positioned between outer legs 69, 71 and around the centre leg 73. For reasons more fully described hereinafter, the transformer secondary winding is centre tapped at position 75 and connected to output line 23, while the remaining portions of the secondary winding are connected through secondary rectifiers 77, 79 to output conductor 25. The output signal is then filtered through capacitor 27 and applied to load 29 as illustrated in Fig. 1.

The single magnetic component 21 performs both the transformer function and the output filter inductor function in a "forward" converter. Conceptually, the single primary winding 67 may be driven either single-ended (as with a dual switch circuit) or symmetrically (as with a bridge circuit), although, in practice, different "limbs" of the core may need to be different sizes to accommodate the two different flux distributions resulting from these two generic types of primary drives.

The magnetic core and the secondary winding 68 are arranged such that a significant fraction of the core volume contains magnetic fields proportional to the sum of the currents in the secondary rectifiers 77, 79. In operation, the magnetic energy stored in this portion of the core corresponds to the energy stored in an output filter inductor. Thus, it is this arrangement which allows the component to perform the inductor filter function.

The primary and secondary windings are arranged such that the geometric path of the primary amp-turns is nearly identical to the amp-turn pattern of the fast transient (high di/dt) secondary current which effects the quick commutate or transfer of the output current at the times of the switch transitions. This winding arrangement allows the component to perform as a tightly coupled transformer.

By utilising a single turn secondary winding, the number of turns of the primary winding can be limited to the magnetic turns ratio, in a typical embodiment, 20 turns. The primary winding, in turn, can be wound on a single plane in a spiral configuration, for example, which provides extremely close magnetic coupling to the single secondary winding 68. The structures are brought together by positioning the legs of the upper half of the inductor core directly over the corresponding portions of the lower half. By utilising this structure, the entire transformer winding is limited to two planes, one for each of the primary and secondary windings. Further, the structure shown in Fig. 4 provides the additional inductance generally utilised in filtering the transformer secondary winding output.

One of the considerations which determines the amount of ripple current in the output of a power transformer is the effect of off time, i.e., the interval between pulses. With the preferred single ended drive, the normal output of the transformer secondary provided by a 20:1 transformer would be 10 volts. However, by centre tapping the secondary winding as illustrated, the 10 volt level is reduced to the desired 5 volts level, but the duration of the pulse is doubled, thereby substantially reducing the interval between pulses and thus the ripple filter current. Thus, the effective off time is substantially reduced, the number of turns in the transformer is reduced to a minimum and tight coupling is ensured by the construction illustrated in Fig. 4. A similar effect in operation would be achieved by utilising the symmetric bridge front end illustrated in Fig. 3 as the transformer primary input, except that no reduction of off time occurs in the symmetric case.

## Claims

1. A DC to DC energy conversion system for providing an output voltage, having a ripple component less than a predetermined value, to a load (29), the system comprising a magnetic component (21) having substantially flat primary and secondary windings (67, 68) and a core of magnetic material (61, 63, 65, 69, 71, 73) 67,

   characterised by the secondary being centre tapped (75) and connected across an external inductance (capacitor 27) with the centre tapping to one side and the two ends, unidirectionally (by diodes 77, 79) to the other, the windings being wound on the core to achieve tight coupling between the windings, the arrangement being such as to perform the dual functions of voltage transformation and filter inductance, energy being delivered to the load from the magnetic component during the time the stored energy in the transformer is increasing.

2. A system as claimed in Claim 1, wherein the windings are planar.

3. A system as claimed in either preceding Claim, wherein the secondary winding is a single conductor.

4. A system as claimed in Claim 3, wherein the single conductor is a planar conductive sheet.

5. A system as claimed in any preceding claim, wherein the core encloses the windings.

## Revendications

1. Système de conversion d'énergie de courant continu en courant continu pour fournir une tension de sortie, ayant une composante d'ondulation inférieure à une valeur prédéterminée, à une charge (29), le système comprenant un composant magnétique (21) ayant des enroulements primaire et secondaire sensiblement plats (67,68) et un noyau en matière magnétique (61,63,65,69,71, 73),
   caractérisé en ce que l'enroulement secondaire comporte une prise centrale (75) et est connecté de part et d'autre d' une inductance extérieure (condensateur 27), la prise centrale étant connectée d'un côté de cette inductance et les deux extrémités étant connectées de façon unidirectionnelle (par des diodes 77,79) à l'autre côté, les enroulements étant enroulés sur le noyau de manière à obtenir un couplage étroit entre les enroulements, l'agencement permettant de remplir les deux fonctions de transformation de tension et d'inductance de filtrage, l'énergie étant fournie à l'élément de charge à partir du composant magnétique pendant la période de croissance de l'énergie emmagasinée dans le transformateur.

2. Système suivant la revendication 1, dans lequel les enroulements sont plans.

3. Système suivant l'une des revendications précédentes, dans lequel l'enroulement secondaire est un conducteur unique.

4. Système suivant la revendication 3, dans lequel le conducteur unique est une feuille conductrice plane.

5. Système suivant l'une des revendications précédentes, dans lequel le noyau entoure les enroulements.

**Patentansprüche**

1. Ein Gleichstrom-Gleichstrom-Energiewandlungssystem zur Bereitstellung einer Ausgangsspannung mit einer unter einem vorbestimmten Wert liegenden Welligkeit an eine Last (29), wobei das System einen magnetischen Bauteil (21) besitzt, der im wesentlichen flache Primär- und Sekundärwicklungen (67, 68) und einen Kern aus magnetischem Material (61, 63, 65, 69, 71, 73) 67 aufweist,

dadurch gekennzeichnet, daß die sekundäre in der Mitte angezapft ist und an eine Induktivität (Kondensator 27) geschaltet ist, nämlich mit der Mittelanzapfung an eine Seite und den beiden Enden in gleicher Richtung (über Dioden 77, 79) an die andere, wobei die Windungen auf den Kern gewickelt sind, um eine enge Kopplung zwischen den Windungen zu erzielen, und die Anordnung solcherart ist, daß sie die Doppelfunktion einer Spannungstransformation und einer Filterinduktivität gewährleistet, und während der Zeit, zu der die in dem Transformator gespeicherte Energie zunimmt, Energie von dem magnetischen Bauteil an die Last geliefert wird.

2. System nach Anspruch 1, bei welchem die Wicklungen planar sind.

3. System nach einem der vorgehenden Ansprüche, bei welchem die Sekundärwicklung ein einzelner Leiter ist.

4. System nach Anspruch 3, bei welchem der einzelne Leiter eine planare leitende Lage ist.

5. System nach irgendeinem der vorgehenden Ansprüche, bei welchem der Kern die Wicklungen umschließt.

**FIG. 1**

SINGLE ENDED FRONT END

**FIG. 2**

BRIDGE FRONT END

**FIG. 3**

TRANSFORMER / INDUCTOR CORE

PLANAR MULTI-TURN PRIMARY

COPPER SHEET SECONDARY STRUCTURE

## FIG. 4